Europäisches Patentamt

European Patent Office

Office européen des brevets

(19)

(11) Publication number: **0 041 835**

**B1**

(12) **EUROPEAN PATENT SPECIFICATION**

(45) Date of publication of patent specification: **06.02.85**

(21) Application number: **81302488.2**

(22) Date of filing: **04.06.81**

(51) Int. Cl.⁴: **B 21 C 37/06, B 21 D 26/02, B 21 D 39/00, B 23 P 6/00**

(54) **Tube expanding.**

(30) Priority: **05.06.80 US 156543**

(43) Date of publication of application:
**16.12.81 Bulletin 81/50**

(45) Publication of the grant of the patent:
**06.02.85 Bulletin 85/06**

(84) Designated Contracting States:
**CH DE FR GB IT LI**

(56) References cited:
**EP-A-0 015 712
DE-B-1 527 547
US-A-3 962 767
US-A-4 069 573
US-A-4 195 390**

**VGB-KRAFTWERKSTECHNIK, vol. 56, no. 7,
Sonderdruck A 31e, p. 1 to 11, from H. Krips
and M. Podhorsky**

(73) Proprietor: **THE BABCOCK & WILCOX
COMPANY
1010 Common Street P.O. Box 60035
New Orleans Louisiana 70160 (US)**

(72) Inventor: **Finch, Curtis L.
4714 Heritage Drive
Lynchburg Virginia (US)**

(74) Representative: **Cotter, Ivan John et al
D. YOUNG & CO. 10 Staple Inn
London WC1V 7RD (GB)**

Courier Press, Leamington Spa, England.

## Description

The present invention relates to tube expanding. More particularly, but not exclusively, the invention relates to controlled expansion of a tube within a tube sheet or within another tube using a pressurised fluid system.

Steam generators used in commercial nuclear power plants are heat exchangers including a vessel containing a large number of stainless steel tubes affixed at their ends to tube sheets. In some steam generators, namely the 'U-tube' type, the tubes are formed in the shape of a 'U' with both ends affixed to a single tube sheet. In other steam generators, namely the 'once-through' type, the tubes are straight and affixed between two separate tube sheets. Typically, heated radioactive high pressure reactor core primary coolant is directed through the tubes. A relatively cool, low pressure secondary coolant, typically water, is pumped through the steam generator around the hot tubes to thereby gain heat and to varpourise into steam, whereby the name 'steam generator' arises. The steam generator tubes are exposed to a hostile atmosphere of undesireable chemicals, temperatures and temperature gradients that result in degradation of the integrity of the tubes. For example, corrosive chemical action that occurs during alternate wetting and drying of the tube surface in a vapour-liquid mixture atmosphere leads to a failure mechanism known as stress-corrosion cracking. Another mechanism leading to tube failure is vibration induced erosion.

However, regardless of how the steam generator tube fails, the result is a leak and a flow of radioactive high pressure primary coolant into the low pressure secondary coolant. A certain number of these leaks are tolerable. However, when leakage occurs to the extent that the secondary coolant becomes unacceptably radioactive, it becomes necessary to replace or plug the tubes. Since replacing tubes is a difficult operation, especially in the case of the U-tube type steam generator, the tubes are typically plugged. Unfortunately, as more tubes are plugged, the capacity of the steam generator is decreased. Eventually, the capacity of the steam generator will be decreased to such a degree that large scale overhaul is required.

The foregoing inevitably can be circumvented to some extent by stiffening the tubes in the vicinities of defects before the defects become leaks. Hereinafter, a 'defective tube' is defined as a tube having a degraded wall thickness but not a leaking tube. It may be desirable to plug the tube rather than stiffen it once the defect has surpassed 40% of the wall thickness. Defective tubes can be identified by known tube inspection techniques. Furthermore, as a precautionary measure, it is desirable to stiffen tubes in areas of the steam generator which experience high fluid velocities where the likelihood of vibration induced erosion is increased.

To stiffen the tubes, typically, a sleeve of sufficient length to cover the defect and to allow expansion of the sleeve into the tube above and below the defect is inserted within the tube and positioned at the defect location. The sleeve and tube are then expanded above and below the defect to hold them together and thereby stiffen the defective portion of the steam generator tube.

Several methods and devices are available in the prior art for expanding the sleeve within the tube. US—A—4 069 573 (Rogers, Jr. et al) describes a hydraulic tube expander that applies fluid pressure to the inside of the sleeve by means of a pump to expand the sleeve into contact with the steam generator tube and then to expand the sleeve and the tube together. Hereinafter, the term 'hydraulic expander' refers to an expander utilising fluid (liquid or gas) pressure to effect expansion. In US—A—4 069 573, a set expansion pressure is first applied within the fixed tube, and an additional fixed volume of fluid is then forced into the system volume. This method and device suffer from several drawbacks. First, the fluid is applied directly to the inside of the sleeve. This requires a good seal between the expander device and the sleeve, whereby an accurate sizing of the inside diameter of the sleeve is critical. Also, the inside surface of the sleeve must be extremely smooth. These requirements add significantly to the cost of the sleeve. Second, this device spills undesirable fluid into the steam generator, necessitating clean-up and repriming of the apparatus before the next expansion. Third, the method of applying a fixed fluid pressure followed by a fixed volume input results in an increase in the outside diameter of a steam generator tube which is controllable to within about 0.635 mm (0.025 in). This degree of expansion control is not acceptable if the tubes are ever to be withdrawn from the tube sheets for replacement, i.e. when enough tubes are damaged to warrant rebuilding of the steam generator. An expansion of 0.635 mm (0.025 in) will preclude withdrawal of the tube without an unacceptable risk of damage to the tube sheet. This is a particular problem in the once-through steam generator, in which the only way to remove the tube is through a tube sheet. An acceptable degree of steam generator tube outer diameter expansion control is about 0.15 mm (0.006 in) or less, which will allow withdrawal of the steam generator tubes through the tube sheet.

The reason the method of the prior art cannot achieve the desired expansion control is that, because of variance in the dimensions and yield strengths of the sleeves and the tubes, one cannot calculate what fluid pressure to apply to the system or volume of fluid to inject into the system, unless the dimensions and yield strengths of the particular sleeve and tube undergoing expansion are known. Unfortunately, these values vary due to manufacturing tolerances and in-service material property transitions. Each case is different. Treating each expansion uniformly as in the prior art limits control of the steam generator tube outer diameter within about 0.635

mm (0.025 in). Therefore, one cannot calculate the fluid pressure, or volume of fluid introduced to the system or decrease in system volume, or predetermine a distance to expand based on test specimens, and then process willy-nilly to expand hundreds of tubes in a nuclear steam generator: unless, of course, one can accept the degree of control that results.

Similarly, the compressable elastomer device of US—A—4 069 573 is, in fact, incapable of controlled expansion of the tube to within 0.15 mm (0.006 in).

US—A—4 195 390 (Amen) discloses a system in which a sleeve can be expanded into contact with the interior of a tube by applying fluid pressure by way of a pump to a distensible bladder means disposed within the sleeve, but discloses nothing concerning any consequent expansion of the tube or the control thereof.

The present invention provides a method of securing a sleeve within a tube by means of a hydraulic tube expander system including a hydraulic tube expander, the method comprising positioning the expander within the sleeve and the sleeve within the tube and applying fluid pressure to the sleeve by way of pump means of the expander system to expand the sleeve into contact with the interior of the tube and then to expand the sleeve and tube together, the method being characterised by;

beginning operation of the pump means, which is a volume pump means, to incrementally decrease the volume of the fluid system exclusive of the expander while a constant fluid mass is maintained in the system;

continually monitoring the fluid pressure of the system and the slope defined by the degree of change in teN-030041835 1p 8506E-02EF-07060.01.0001-Vhe fluid pressure relative to the incremental decrease in system volume;

continuing operation of the pump means while noting that said slope decreases thereby indicating the onset of plastic deformation of the sleeve and then said slope increases indicating elastic expansion of the tube; and

ceasing operation of the pump means when the slope decreases indicating the onset of plastic yielding of the tube.

The present invention also provides a method of securing a sleeve within a tube by means of a hydraulic tube expander system including a hydraulic tube expander, the method comprising positioning the expander within the sleeve and the sleeve within the tube and applying fluid pressure to the sleeve by way of pump means of the expander system to expand the sleeve into contact with the interior of the tube and then expand the sleeve and tube together, the method being characterised by:

beginning the operation of the pump means, which is a mass pump means, to incrementally increase the mass of fluid in the system while maintaining a constant volume in the system exclusive of the expander;

continually monitoring the slope of the fluid pressure of the system as a function of incremental increase in the system mass;

continuing operation of the pump means while noting that said slope decreases thereby indicating the onset of plastic deformation of the sleeve and then said slope increases indicating elastic expansion of the tube; and

ceasing operation of the pump means when the slope decreases indicating the onset of plastic yielding of the tube.

The present invention further provides a tube expander system comprising a hydraulic tube expander positionable within a sleeve within a tube and means for pressurising fluid within the tube expander to expand the sleeve and tube together, whereby the tube expander is a distensible bladder means, characterised in that means is provided for monitoring change in the fluid pressure and for detecting when the yield point of the tube is reached in order accurately to limit the increase in outside dimension of the tube by ceasing pressurising of the fluid within the bladder means when the yield point of the tube is reached.

Still further, the present invention provides a tube expander system comprising a hydraulic tube expander positionable within a tube, a pump, and a fluid conduit establishing fluid communication between the pump and the hydraulic tube expander, the expander system being characterised by:

a fluid reservoir in fluid communication with the fluid conduit;

a first valve for selectively closing the fluid conduit, the first valve being positioned between the fluid reservoir and pump means;

a second valve for selectively closing the fluid conduit, the second valve being positioned between the pump means and the hydraulic expander;

a pressure sensor and an indicator for sensing and indicating the fluid pressure between the second valve and the hydraulic expander; and

a computer arranged to receive the pressure indication from the pressure sensor and programmed for computing the rate of system pressure change as a function of incremental pump action and stopping the pump action when sensing a decrease in said rate indicative of plastic expansion of the tube.

Embodiments of the present invention described below can overcome or at least alleviate the above-mentioned disadvantages of the prior art. In these embodiments, fluid pressure is used to expand a distensible polyurethane bladder within a sleeve to expand the sleeve into a tube, e.g. a steam generator tube. The fluid is contained at all times within the bladder, as a result of which there is no spillage and no need for repriming of the expander system. The degree of expansion of the outside diameter of the steam generator tube can be controlled within 0.15 mm (0.006 in) by determining in each case exactly when the steam generator tube begins to yield. This can be accomplished by monitoring the change in pressure (dP) of the fluid as a function of the change of the volume (dV) of the fluid system exclusive of the distensible bladder. It is most important to note here that dV represents the volume of the fluid system *exclusive* of the distensible bladder. According to one embodiment of the invention, the change in pressure dP of the system fluid is compared to the change in volume dV. The fluid pressure P of the system will increase linearly relative to dV until the yield point pressure of the sleeve material is reached. As the sleeve yields, the pressure increases at a slower rate relative to dV since the bladder is distending, thus adding volume to the total system and lessening the net decrease in the total volume of the system inclusive of the bladder volume. When the sleeve contacts the inside surface of the steam generator tube, the pressure will increase at a higher rate with respect to dV until the yield strength of the steam generator tube is reached. Again, when the pressure begins to increase at a slower rate with respect to dV the steam generator tube has begun to yield and expand. This is a critical point. The variance of dimensions and material properties of the steam generator tube and the sleeve precludes precise calculation of this point using the prior art methods. By monitoring the pressure rate of change with respect to dV according to this embodiment of the present invention, the point where the steam generator tube begins to yield can be determined with precision in each and every case. In this way, the expansion of the steam generator tube, i.e. the increase in its outer diameter, can be controlled to within a tolerance of 0.15 mm (0.006 in).

In another embodiment, rather than incrementally decreasing the volume of the fluid system, a mass pump adds an incremental fluid mass dM to a fluid system having a fixed fluid volume (fixed volume exclusive of the expansion area, as discussed above). Hereinafter, a 'volume pump' is defined as a positive displacement pump which acts to increase or decrease the pressure of a fluid system by controllably affecting the volume of the fluid system. Hereinafter, a 'mass pump' is defined as a positive displacement pump which acts to increase or decrease the pressure of a fluid system by controllably affecting the mass of the fluid system. Whether a volume pump or a mass pump is used, the fluid system pressure is monitored as a function of the pump incremental action to determine the onset of plastic deformation of the sleeve and tube.

In summary of the foregoing, embodiments of the present invention described hereinbelow provide a method of controllably expanding tubes within a 0.15 mm (0.006 in) limit. The method enables the yield point of the tube to be determined on a case-by-case basis. The method makes use of a hydraulic tube expander utilising an expandable bladder to thereby contain the hydraulic fluid to prevent fluid spillage and eliminate the need to clean the steam generator or to reprime the apparatus between expansions. In the method, a sleeve is expanded within a tube and, for example, secured thereto by incrementally decreasing the volume of the expander system fluid exclusive of the expander which will inherently experience an increase in fluid volume as it expands. The rate of system pressure increase is monitored as a function of incremental volume change. Two critical rate decreases occur during use of the apparatus. The first decrease indicates the onset of plastic expansion of the sleeve. The second decrease indicates the onset of plastic expansion of the tube. The tube outer diameter can be expanded accurately to within 0.15 mm (0.006 in). Alternatively to decreasing the system volume, the fluid system mass can be incrementally increased with the same results. The system fluid is contained within a sealed distensible bladder expander.

The invention will now be further described, by way of illustrative and non-limiting example, with reference to the accompanying drawings, in which like references indicate like items throughout, and in which:

Figure 1 is a graph illustrating a method embodying the present invention;

Figure 2 is a schematic view of a hydraulic tube expanding system embodying the present invention; and

Figure 3 is a cross-sectional view of a hydraulic tube expander according to one embodiment of the invention.

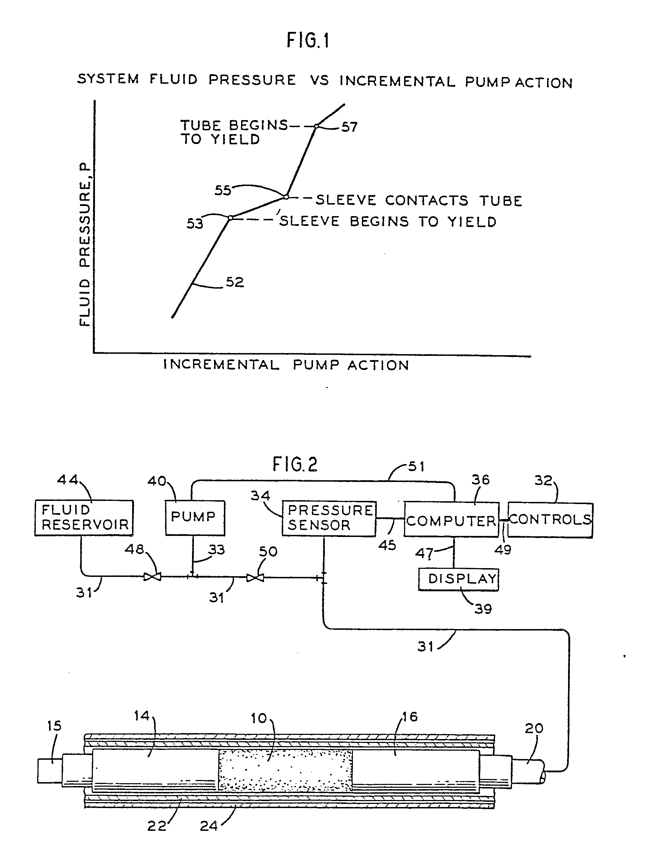

Figure 1 shows a graph illustrating a method embodying the present invention for securing a repair sleeve within a tube (e.g. a steam generator tube), using a hydraulic tube expanding system. In Figure 1, the system fluid pressure is plotted as a function of incremental action of a pump 40 (Figure 2) of the system. The pump 40 is a volume pump which incrementally decreases the volume of a fluid chamber (not shown) therein. Alternatively, the pump 40 may be a mass pump which incrementally increases the fluid system mass. Figure 2 represents both embodiments with the pump 40 being either a volume pump or a mass pump. The end result is the same, as will become clear from the following description.

First, consider the utilisation of a volume pump. In operation, the incremental decrease in pump volume causes two related effects: (1) an increase in system pressure; and (2) an expansion of the repair sleeve and steam generator tube. Obviously, the less the sleeve and tube expand to thereby add volume to the total fluid system, the greater the increase in pressure per incremental volume decrease of the system exclusive of the expander. The fluid system pressure is indicative of the relative resistance to sleeve and tube expansion. As the sleeve and tube expand elastically the resistance to expansion is relatively high. As pressure is increased and the sleeve and tube yield points are reached the sleeve and tube begin to expand plastically and the resistance to expansion is relatively low.

A curve 52 of Figure 1 illustrates the expansion of a repair sleeve within a tube. As the pump incrementally decreases the fluid volume of the system, the fluid is compressed, the system fluid pressure increases, and the sleeve is expanded elastically. At a point 53 the sleeve material reaches its yield point. Between the point 53 and a point 55 the sleeve expands plastically. The slope of the curve 52 between the points 53 and 55 has decreased because the sleeve's resistance to expansion has decreased. As the sleeve expands, volume is thereby added to the total fluid system in the vicinity of the expander (although net system volume is being decreased by the pump action.) More volume is added due to sleeve expansion during plastic deformation per incremental volume decrease (dV) in the pump (or in the system exclusive of the expander) than is added during elastic deformation of the sleeve. The net effect is a relatively lower *total* system volume decrease per incremental volume decrease in the pump during plastic deformation then during elastic deformation of the sleeve. The system fluid pressure is inversely proportional to the system fluid volume (assuming, of course, that a constant fluid mass is maintained).

At the point 55, the sleeve contacts the tube. The curve 52, between the point 55 and a point 57, represents the elastic expansion of the tube. At the point 57 the tube begins to yield and expand plastically. The points 53 and 57 will not always occur at the same pressure. Each tube and sleeve are different in material dimensions and properties. By determining the point 57 from each and every expansion the increase in the tube outside diameter can be maintained within 0.15 mm (0.006 in) for typical steam generator size tubes. Above the point 57, the curve 52 represents the plastic expansion of the tube and sleeve.

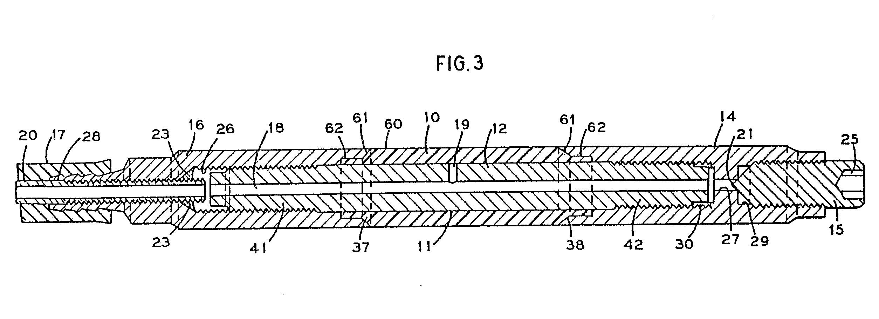

Figure 2, shows a tube expanding system embodying the present invention. In Figure 2, a sleeve 22 is to be expanded into a steam generator tube 24. The system comprises an expanding apparatus or expander, described in more detail below with reference to Figure 3, that includes a distensible polyurethane bladder 10. The bladder 10 and sleeve 22 are appropriately positioned for the expansion. This is easily accomplished by first expanding the bladder 10 to hold the sleeve 22 and then inserting them both into the tube 24. A fluid supply conduit 31 establishes fluid communication from a reservoir 44 to an expander supply tube 20. The control volume (or control mass) pump 40 is in fluid communication with the conduit 31 via a conduit 33. The pump 40 incrementally decreases the volume of a chamber (not shown) therein. The chamber is in fluid communication with the conduit 33. A valve 48 is positioned in the conduit 31 between the reservoir 44 and the conduit 33. A valve 50 is positioned in the conduit 31 between the conduit 33 and the expander supply tube 20. A pressure sensor 34 senses the fluid pressure within the conduit 31 and generates a signal which it supplies through a cable 45 to a computer 36. The computer 36 is programmed to generate a signal which is supplied through a cable 47 to a display 39 which displays the pressure as a graph according to Figure 1. Controls 32 enable an operator to instruct and control the computer 36 by communicating therewith via the cable 49. The computer 36 generates a signal and applies it to the pump 40 through a cable 51 to incrementaeN-030041835 2p 8506E-02EF-07060.01.0002-Vlly decrease the fluid volume of the system (or incrementally increase the mass). The computer 36 is programmed to monitor the incoming pressure signal as a function of incremental pump action (volume decreases or mass increase) and to indicate via the display 39 a change in slope of the curve thereby enabling precise detection of the onset of plastic deformation of the sleeve 22 and tube 24.

To explain operation in further detail a typical set of dimensions will be given as follows.

Steam generator tube outside diameter
15.93 mm (0.627 in)
Steam generator tube inside diameter
14.00 mm (0.551 in)
Sleeve outside diameter
13.34 mm (0.525 in)
Sleeve inside diameter
10.92 mm (0.430 in)

Also, the pump 40 decreases the volume of its chamber with an accuracy finer than 0.0164 cm³ (0.001 in³). The total system volume is approximately 8.17 cm³ (0.5 in³).

To begin the expansion procedure, the valve 50 is closed and the valve 48 is opened. The pump 40 is turned on and draws fluid into its chamber. The valve 48 is now closed and the valve 50 opened. The pump 40 now acts to increase the system pressure to expand the bladder 10 enough to grip the sleeve 22. Air can be removed from the fluid system by bleeding at a plug 15 (Figure 3) if desired; but, if not, the operation of the system will not be affected. The fluid employed in the preferred embodiment is glycerin.

The sleeve 22 is positioned in the tube 24 at the location to be stiffened. The pump 40, under the direction of the computer 36, begins to decrease its chamber volume. At a volume decrease of, for example, 2.87 cm³ (0.175 in³) and a system pressure of, for example, 75.85 MPa (11,000 lbf/in² (PSI)) the sleeve 22 yields and begins plastic deformation. This is represented by the point 53 of Figure 1. The computer 36 senses the change in slope of the curve 52 as explained above with reference to Figure 1 and stops the pump 40.

The operator views the display 39 and instructs the computer 36 via the controls 32 to proceed. The pump 40 is reactivated. At a total volume decrease of, for example, 3.28 cm³ (0.200 in³) and a pressure of, for example 96.53 MPa (14,000 (PSI)), the computer 36 senses another slope change as the sleeve 22 contacts the tube 24. This occurrence is represented by the point 55 of Figure 1. At this point the sleeve 22 has been expanded 0.254 to 0.762 mm (0.010 to 0.030 in). At a volume decrease of, for example, 3.87 cm³ (0.236 in³) and a pressure of, for example, 144.80 MPa (21,000 PSI), the computer 36 senses another slope change as the tube 24 begins to yield. This is represented by the point 57 of Figure 1. The pump 40 is deactivated. At this point the tube 24 has increased its outer diameter by about 0.05 mm (0.002 in).

Two phenomena of materials are worth noting here. First, when the tube is supposedly expanded 'plastically', true plastic deformation does not take place. The material maintains elastic characteristics to a certain degree. The second phenomenon is that as the tube is expanded it is 'work-hardened' and becomes more elastic and less plastic. The pertinent effect of these phenomena is that when the expanding force is relieved the material will spring back somewhat. This effect is of the order of 0.025 mm (0.001 in) of outside diameter in the present example.

Once the yield point 57 has been determined, the remainder of the expansion is accurately predicted. In the present example a further decrease in the pump volume to a total decrease of 4.00 cm$^3$ (0.244 in$^3$) causes the outside diameter of the tube 24 to increase by 0.15 mm (0.006 in) to a total outside diameter of 16.08 mm (0.633 in). Relieving the expanding pressure, the tube 24 springs back to an outside diameter of 16.05 mm (0.632 in), a resulting 0.12 mm (0.005 in) increase. The expansion is sufficient to adhere the sleeve 22 to the steam generator tube 24 but not enough to preclude subsequent removal of the tube 24 through a tube sheet (not shown).

Of course, the ends of the sleeve 22 are expanded both below and above the area of the degradation of tube 24, to effectively stiffen the tube.

The above-described embodiment comprises, as mentioned, a control volume pump 40 that incrementally decreases the volume V of the system exclusive of the bladder 10. Alternatively, as mentioned above, fluid mass could be incrementally added to the system with a control mass pump 40 while maintaining a constant volume V, with the same results. System pressure is maintained as a function of incremental pump action. In the case of a control mass pump, this incremental action represents the increase in system mass while a constant system volume, exclusive of the expander, is maintained. The method as hereinbefore discussed is the same, regardless of whether a control mass pump or a control volume pump is used.

Figure 3 is a cross-sectional view of the above-mentioned tube expander. The distensible bladder 10 is a hollow polyurethane cylinder having a bladder tubing end 37 and a bladder plug end 38. The inside diameter of the bladder 10 defines a chamber 11. The bladder 10 has a first outside diameter 60 for its midsection, and a decreasing diameter 61 inwardly tapering to a smaller second outside diameter 62 at the ends 37 and 38. The ends 37 and 38 having the decreasing diameter 61 and second diameter 62 serve to be self-sealing to prevent leakage of fluid. As fluid pressure increases, the ends 37 and 38 are forced against mating surfaces of a tubing end-fitting 16 and a plug end-fitting 14, thereby sealing the bladder 10. The decreasing diameter 61 is provided to prevent shearing of the midsection of the bladder 10 from the ends 37 and 38. The bladder 10 is reasonably elastic and has a high tensile strength. Polyurethane having a hardness between 60 on the Shore A scale and 75 on the Shore D scale is acceptable. In the preferred embodiment a polyurethane of 92 Shore A is used. Also, the tensile strength of the bladder 10 is preferably greater than about 34.5 MPa (5,000 PSI). In the preferred embodiment, the bladder 10 has a tensile strength of 42.75 MPa (6,200 PSI). The bladder 10 and at the end fittings 14 and 16 have equivalent outer diameters.

A stud 12 extends through the chamber 11 and protrudes from both the ends 37 and 38. A protruding stud tubing end 41 and a stud plug end 42 of the stud 12 are threaded. A first bore 18 extends longitudinally through the stud 12. A second bore 19 extends from the surface of the stud 12 to the bore 18 to establish fluid communication between the bore 18 and the chamber 11. The tubing end-fitting 16 has a longitudinally extending tubing end-fitting stud bore 26 threaded to accept the stud tubing end 41, and a longitudinally extending tube bore 28 threaded to accept the end of the threaded supply tube 20. The tube 20 extends through the tube bore 28 and protrudes into the tubing end-fitting stud bore 26. The tube 20 may be soldered to the tubing end-fitting 16 with solder 23 if desired, but this is not necessary if the supply tube 20 and tubing end-fitting 16 are properly threaded. A pliable nylon tube 17 serves to protect the tube 20 extending therethrough.

The plug end-fitting 14 has a longitudinally extending plug end-fitting stud bore 30 threaded to accept the stud plug end 42, a longitudinally extending plug bore 29 threaded to accept the plug 15, and a bleed bore 27 establishing fluid communication between the plug end-fitting stud bore 30 and the plug bore 29.

The plug 15 has a hexagonal socket 25 and a tapered point 21. The point 21 seats in the bleed bore 27. The plug 15 can be removed for bleeding the fluid system if desired. The bores 26 and 30 of the end-fittings 16 and 14, respectively, have an inside diameter formed to mate with the ends 37 and 38 of bladder 10. Actually, an interface fit is desirable to effect a better seal.

Upon assembling the apparatus as shown in Figure 3, the bladder 10 is sealed by the end-fittings 14 and 16 and the stud 12. A fluid path extends from the supply tube 20 to the chamber 11 of the bladder 10 via the bores 26, 18 and 19.

It should be noted that, alternatively, more than one bladder could be utilized with an extending fitting positioned therebetween. However, there would be a resulting decrease in the controllability of the expansion due to property variance of the sleeve and tube between the two points being expanded.

Although the computer 36 is utilized, adding to the precision of the system, the invention is not limited thereto. Manual control of the system can yield equally effective results.

**Claims**

1. A method of securing a sleeve within a tube by means of a hydraulic tube expander system including a hydraulic tube expander, the method comprising positioning the expander within the sleeve (22) and the sleeve (22) within the tube (24) and applying fluid pressure to the sleeve (22) by way of pump means (40) of the expander system to expand the sleeve into contact with the interior of the tube (24) and then to expand the sleeve (22) and tube (24) together, the method being characterised by;

beginning operation of the pump means (40), which is a volume pump means, to incrementally decrease the volume of the fluid system exclusive of the expander while a constant fluid mass is maintained in the system;

continually monitoring (39) the fluid pressure of the system and the slope (52) defined by the degree of change in the fluid pressure (P) relative to the incremental decrease in system volume (V);

continuing operation of the pump means (40) while noting that said slope decreases thereby indicating the onset of plastic deformation of the sleeve (22) and then said slope increases indicating elastic expansion of the tube (24); and

ceasing operation of the pump means (40) when the slope decreases indicating the onset of plastic yielding of the tube (24).

2. A method according to claim 1, comprising the steps of continuing operation of the pump means (40) to further decrease the volume therein by a predetermined amount to thereby further expand the tube (24).

3. A method of securing a sleeve within a tube by means of a hydraulic tube expander system including a hydraulic tube expander, the method comprising positioning the expander within the sleeve (22) and the sleeve (22) within the tube (24) and applying fluid pressure to the sleeve (22) by way of pump means (40) of the expander system to expand the sleeve into contact with the interior of the tube (24) and then expand the sleeve (22) and tube (24) together, the method being characterised by:

beginning the operation of the pump means (40), which is a mass pump means, to incrementally increase the mass of fluid in the system while maintaining a constant volume in the system exclusive of the expander;

continually monitoring the slope of the fluid pressure of the system as a function of incremental increase in the system mass;

continuing operation of the pump means (40) while noting that said slope decreases thereby indicating the onset of plastic deformation of the sleeve (22) and then said slope increases indicating elastic expansion of the tube (24); and

ceasing operation of the pump means (40) when the slope decreases indicating the onset of plastic yielding of the tube (24).

4. A method according to claim 3, comprising the step of continuing operation of the pump means (40) to further increase the system mass by a predetermined amount to thereby further expand the tube (24).

5. A method according to claim 2 or claim 4, wherein the resulting permanent increase in the outside diameter of the tube (24) after relaxation is less than 0.15 mm (0.006 in).

6. A tube expander system comprising a hydraulic tube expander positionable within a sleeve (22) within a tube (24) and means (40) for pressurising fluid within the tube expander to expand the sleeve (22) and tube (24) together, whereby the tube expander is a distensible bladder means (10), characterized in that means is provided for monitoring change in the fluid pressure and for detecting when the yield point of the tube (24) is reached in order accurately to limit the increase in outside dimension of the tube (24) by ceasing pressurising of the fluid within the bladder means when the yield point of the tube is reached.

7. A tube expander system according to claim 6, wherein the bladder means is distensible relative to the tube (24) only in the radial direction.

8. A tube expander system according to claim 6 or claim 7, wherein the bladder means includes:

a distensible bladder (10) having a chamber (11); and

sealing means for sealing the bladder (10) to preclude the escape of fluid from the chamber (11) thereof.

9. A tube expander system according to claim 8, wherein the bladder (10) is of polyurethane.

10. A tube expander system according to claim 8 or claim 9, wherein:

the bladder (10) is a cylinder having a bladder tubing end (37) and a bladder plug end (38);

the tubing end (37) and plug end (38) have inwardly tapered outer diameters (61);

the chamber (11) extends longitudinally through the bladder (10); and

the sealing means includes an elongate cylindrical stud (12) extending through the chamber (11), the stud (12) having a threaded stud tubing end (41) and a threaded stud plug end (42), a first bore (18) extending longitudinally in the stud (12) from the stud tubing end (41), a second bore (19) extending from the first bore (18) to the surface of the stud (12) between the bladder tubing end (37) and the bladder plug end (38) to establish fluid communication between the stud tubing end (41) and the chamber (11) via the first bore (18) and the second bore (19), a tubing end-fitting (16) having a tubing end-fitting stud bore (26) threaded to engage the threaded stud tubing end (41) and a tube bore in fluid communication with the tubing end-fitting stud bore (26) to engage a fluid supply tube (20) to establish fluid communication between the fluid supply tube (20) and the stud tubing end (41), the tubing end-fitting stud bore (26) being outwardly tapered to mate with the outer diameter of the bladder tubing end (37), a plug end-fitting (14) having a plug end-fitting stud bore (30) threaded to engage the threaded stud plug end (42), the plug end-fitting stud bore (30) being outwardly tapered to mate with the outer diameter of the bladder stud end (38), and the tubing end-fitting (16) and the plug end-fitting (14) being screwed onto the stud (12) to mate with the bladder tubing end (37) and the bladder plug end (38), respectively, to seal the chamber (11).

11. A tube expander system according to claim 10, wherein:

the first bore (18) extends through the stud; and

the plug end-fitting (14) includes a threaded plug bore (29) in fluid communication with the plug end-fitting bore (30) and a threaded plug (15) screwed or screwable into the plug bore (29) to seal the plug bore.

12. A tube expander system according to claim 10 or claim 11, wherein the bladder (10), the tubing end-fitting (16) and the plug end-fitting (14) have equivalent outer diameters.

13. A tube expander system comprising a hydraulic tube expander positionable within a tube (24), a pump (40), and a fluid conduit (31) establishing fluid communication between the pump (40) and the hydraulic tube expander, the expander system being characterised by:

a fluid reservoir (44) in fluid communication with the fluid conduit (31);

a first valve (48) for selectively closing the fluid conduit (31), the first valve being positioned between the fluid reservoir (44) and pump means (40);

a second valve (50) for selectively closing the fluid conduit (31), the second valve (50) being positioned between the pump means (40) and the hydraulic expander;

a pressure sensor (34) and an indicator (39) for sensing and indicating the fluid pressure between the second valve (50) and the hydraulic expander; and

a computer (36) arranged to receive the pressure indication from the pressure sensor (34) and programmed for computing the rate of system pressure change as a function of incremental pump action and stopping the pump action when sensing a decrease in said rate indicative of plastic expansion of the tube (24).

14. A tube expander system according to claim 13, which contains said fluid, the fluid being glycerin.

15. A tube expander system according to claim 13 or claim 14, wherein the pump means (40) acts as a constant volume pump for incrementally decreasing the volume of the system exclusive of the hydraulic expander.

16. A tube expander system according to claim 13 or claim 14, wherein the pump means (40) acts as a constant mass pump for incrementally increasing the mass of the system.

17. A tube expander system according to any one of claims 13 to 16, wherein the computer (36) is programmed to allow a fixed number of further incremental actions by the pump (40) after sensing said decrease in said rate, whereby the tube (24) is further expanded.

18. A tube expander system according to claim 17, wherein said further incremental pump actions will result in a tube external diameter increase of no more than 0.15 mm (0.006 in) after relaxation.

19. A tube expander system according to claim 18, wherein said decrease in said rate follows a prior decrease in said rate indicative of the plastic expansion of a sleeve (22) positioned within the tube (24) and an increase in said rate indicating the onset of elastic expansion of the tube.

**Revendications**

1. Procédé de fixation d'un manchon à l'intérieur d'un tube au moyen d'un système élargisseur hydraulique de tubes comprenant un élargisseur hydraulique de tubes, le procédé consistant à positionner l'élargisseur à l'intérieur du manchon (22) et le manchon (22) à l'intérieur du tube (24) et à appliquer une pression de fluide au manchon (22) au moyen d'une pompe (40) du système élargisseur pour élargir le manchon en l'amenant en contact avec l'intérieur du tube (24), et ensuite pour élargir le manchon (22) et le tube (24) ensemble, le procédé étant caractérisé par le fait:

— que l'on commence le fonctionnement de la pompe (40), qui est une pompe volumétrique, de manière à diminuer incrémentiellement le volume du système à fluide à l'exclusion de l'élargisseur tandis qu'une masse constante de fluide est maintenue dans le système;

— que l'on contrôle continuellement (39) la pression de fluide du système et la pente (52) définie par le degré de variation de la pression de fluide (P) relativement à la diminution incrémentielle du volume (V) du système;

— que l'on continue le fonctionnement de la pompe (40) tout en notant que ladite pente diminue, indiquant ainsi l'intervention d'une déformation plastique du manchon (22) et qu'ensuite cette pente augmente, indiquant un élargissement élastique du tube (24), et

— que l'on cesse le fonctionnement de la pompe (40) quand la pente diminue, indiquant l'intervention d'un écoulement plastique du tube (24).

2. Procédé selon la revendication 1, comprenant l'étape consistant à poursuivre le fonctionnement de la pompe (40) pour diminuer davantage le volume de celle-ci dans une mesure prédéterminée, de manière à élargir davantage le tube (24).

3. Procédé de fixation d'un manchon à l'intérieur d'un tube au moyen d'un système élargisseur hydraulique de tubes comprenant un élargisseur hydraulique de tubes, le procédé consistant à positionner l'élargisseur à l'intérieur du manchon (22) et le manchon (22) à l'intérieur du tube (24) et à appliquer une pression de fluide au manchon (22) au moyen d'une pompe (40) du système élargisseur pour élargir le manchon (22) en l'amenant en contact avec l'intérieur du tube (24) et ensuite pour élargir le manchon (22) et le tube (24), ensemble, le procédé étant caractérisé par le fait:

— que l'on commence le fonctionnement de la pompe (40), qui est une pompe massique, de manière à diminuer incrémentiellement la masse de fluide dans le système tout en maintenant un volume constant dans le système à l'exclusion de l'élargisseur;

— que l'on contrôle continuellement la pente de la pression de fluide du système en fonction de l'augmentation incrémentielle de la masse du système;

— que l'on continue le fonctionnement de la pompe (40) tout en notant que ladite pente diminue, indiquant ainsi l'intervention d'une déformation plastique du manchon (22) et qu'ensuite cette pente augmente, indiquant un élargissement élastique du tube (24), et

— que l'on cesse le fonctionnement de la pompe (40) quand la pente diminue, indiquant l'intervention d'un écoulement plastique du tube (24).

4. Procédé selon la revendication 3, comprenant l'étape consistant à poursuivre le fonctionnement de la pompe (40) pour augmenter davantage la masse du système dans une mesure prédéterminée et ainsi à élargir davantage le tube (24).

5. Procédé selon l'une quelconque des revendications 2 et 4, dans lequel l'augmentation permanente donnée au diamètre extérieur du tube (24), après relâchement, est inférieur à 0,15 mm.

6. Système élargisseur de tubes comprenant un élargisseur hydraulique de tubes pouvant être positionné à l'intérieur d'un manchon (22) placé à l'intérieur d'un tube (24) et des moyens (40) servant à mettre du fluide sous pression à l'intérieur de l'élargisseur de tubes pour élargir le manchon (22) et le tube (24) ensemble, de sorte que l'élargisseur de tubes est un sac expansible (10), caractérisé par le fait que des moyens sont prévus pour contrôler la variation de la pression de fluide et pour détecter le moment où le point d'écoulement du tube (24) est atteint, afin de limiter avec précision l'augmentation de dimension extérieure du tube (24p en cessant de mettre le fluide sous pression à l'intérieur du sac quand le point d'éouclement du tube est atteint.

7. Système élargisseur de tubes selon la revendication 6, dans lequel le sac est expansible relativement au tube (24) en direction radiale seulement.

8. Système élargisseur de tubes selon l'une des revendications 6 et 7, dans lequel le sac comprend:

— un sac expansible (10) présentant une chambre (11) et

— des moyens d'étanchéité pour assurer l'étanchéité du sac (10) afin d'empêcher le fluide de s'échapper de la chambre (11) de celui-ci.

9. Système élargisseur de tubes selon la revendication 8, dans lequel le sac (10) est en polyuré-thane.

10. Système élargisseur de tubes selon les revendications 8 et 9, dans lequel:

— le sac (10) est un cylindre présentant une extrémité du tubulure de sac (37) et une extrémité de bouchon de sac (38),

— l'extrémité de tubulure (37) et l'extrémité de bouchon (38) ont des diamètres extérieurs (61) rétrécissant vers l'intérieur;

— le chambre (11) traverse longitudinalement le sac (10) et

— les moyens d'étanchéité comprennent un goujon cylindrique allongé (12) passant à travers la chambre (11), le goujon (12) présentant une extrémité de tubulure de goujon (41) filetée et une extrémité de bouchon de goujon (42) filetée, une première perforation (18) s'étendant longitudinalement dans le goujon (12) depuis l'extrémité de tubulure de goujon (41), une deuxième perforation (19) s'étendant de la première perforation (18) à la surface du goujon (12), entre l'extrémité de tubulure (37) du sac et l'extrémité de bouchon (38) du sac, de manière à établir une communication de fluide entre l'extrémité de tubulure (41) du goujon et la chambre (11) en passant par la première perforation (18) et la deuxième perforation (19), un raccord d'extrémité de tubulure (16) présentant une perforation de goujon de raccord d'extrémité de tubulure (26) filetée de manière à s'adapter à l'extrémité de tubulure de goujon (41) filetée, et une perforation de tube en communication de fluide avec la perforation de goujon de raccord d'extrémité de tubulure (26) de manière à s'adapter à une tube d'amenée de fluide (20) pour établir une communication de fluide entre le tube d'amenée de fluide (20) et l'extrémité de tubulure (41) du goujon, la perforation de goujon de raccord d'extrémité de tubulure (26) étant évasée vers l'extérieur pour s'adapter au diamètre extérieur de l'extrémité de tubulure (37) du sac, un raccord d'extrémité de bouchon (14) présentant une perforation de goujon de raccord d'extrémité de bouchon (30) filetée de manière à s'adapter à l'extrémité de bouchon filetée (42) du goujon, la perforation de goujon de raccord d'extrémité de bouchon (39) étant évasée vers l'extérieur de manière à s'adapter au diamètre extérieur de l'extrémité de goujon (38) du sac et le raccord d'extrémité de tubulure (16) et le raccord d'extrémité de bouchon (14) étant vissés sur le goujon (12) de manière à s'adapter respectivement à l'extrémité de tubulure (37) du sac et à l'extrémité de bouchon (38) du sac, pour rendre étanche la chambre (11).

11. Système élargisseur de tubes selon la revendication 10, dans lequel:

— la première perforation (18) passe à travers le goujon, et

— le raccord d'extrémité de bouchon (14) comprend une perforation filetée de bouchon (29) en communication de fluide avec la perforation de raccord d'extrémité de bouchon (30) et un bouchon fileté (15) vissé ou pouvant se visser dans la

perforation de bouchon (29) pour rendre étanche la perforation de bouchon.

12. Système élargisseur de tubes selon les revendications 10 et 11, dans lequel le sac (10), le raccord d'extrémité de tubulure (16) et le raccord d'extrémité de bouchon (14) ont des diamètres extérieurs équivalents.

13. Système élargisseur de tubes comprenant un élargisseur hydraulyque de tubes pouvant être positionné à l'intérieur d'un tube (24), une pompe (40) et un conduit à fluide (31) établissant une communication de fluide entre la pompe (40) et l'élargisseur hydraulique de tubes, le système étant caractérisé par:

— un réservoir à fluide (44) en communication de fluide avec le conduit à fluide (31);

— une première valve (48) servant à fermer sélectivement le conduit à fluide (31), la première valve étant placée entre le réservoir à fluide (44) et la pompe (40);

— une deuxième valve (50) servant à fermer sélectivement le conduit à fluide (31), la deuxième valve (50) étant placée entre la pompe (40) et l'élargisseur hydraulique;

— un capteur de pression (34) et un indicateur (39) servant à indiquer la pression de fluide entre la deuxième valve (50) et l'élargisseur hydraulique et

— un ordinateur (36) conçu pour recevoir l'indication de pression venant du capteur de pression (34) et programmé de manière à calculer la vitesse de variation de la pression du système en fonction de l'action incrémentielle de la pompe et à arrêter l'action de la pompe lors de la détection d'une diminution de cette vitesse, indiquant un élargissement plastique du tube (24).

14. Système élargisseur de tubes selon la revendication 13, qui contient le fluide, le fluide étant le glycérol.

15. Systéme élargisseur de tubes selon la revendications 13 et 14, dans lequel la pompe (40) agit comme une pompe à volume constant pour diminuer incrémentiellement le volume du système à l'exclusion de l'élargisseur hydraulique.

16. Système élargisseur de tubes selon les reveidications 13 et 14, dans lequel la pompe (40) agit comme une pompe à masse constante pour augmenter incrémentiellement la masse du système.

17. Système élargisseur de tubes selon les revendications 13 à 16, dans lequel l'ordinateur (36) est programmé pour permettre un nombre fixe de nouvelles actions incrémentielles de la pompe (40) après avoir détecté la diminution de la vitesse, de sorte que le tube (24) est élargi davantage.

18. Système élargisseur de tubes selon la revendication 17, dans lequel les actions incrémentielles supplémentaires de la pompe entraînent un augmentation de diamètre extérieur du tube ne dépassant pas 0,15 mm après relâchement.

19. Système élargisseur de tubes selon la revendication 18, dans lequel la diminution de la vitesse suit une diminution précédente de cette vitesse, indiquant l'élargissement plastique d'un manchon (22) placé à l'intérieur du tube (24) et une augmentation de cette vitesse indiquant le début de l'élargissement élastique du tube.

**Patentansprüche**

1. Verfahren zum Befestigen einer Muffe innerhalb eines Rohres mittels eines hydraulichen Systems zum Aufweiten von Rohren, das eine hydrauliche Rohraufweiteinrichtung enthält, wobei die Aufweiteinrichtung innerhalb der Muffe (22) und die Muffe (22) innerhalb des Rohres (24) in Stellung gebracht werden und der Muffe (22) über eine Pumpeinrichtung (40) des Aufweitsystems unter Druck stehende Flüssigkeit zugeführt wird, um die Muffe (22) bis zur Berührung mit der Innenseite des Rohres (24) und dann die Muffe (22) und das Rohr (24) zusammen aufzuweiten, gekennzeichnet durch

Tätigkeitsbeginn der Pumpeinrichtung (40), welche eine Volumenpumpeinrichtung ist, um das Volumen des Flüssigkeitssystems außerhalb der Aufweiteinrichtung zunehmend zu vermindern, während eine gleichbleibende Flüssigkeitsmenge in dem System aufrechterhalten wird,

fortdauernde Überwachung (39) des Flüssigkeitsdruckes des Systems und des Gradienten (52), der durch den Grad der Änderung des Flüssigkeitsdruckes (P) in Bezug auf die zunehmende Verminderung des Systemvolumens (V) bestimmt wird,

fortdauernde Tätigkeit der Pumpeinrichtung (40), solange beobachtet wird, daß der Gradient abfällt, wodurch der Beginn der plastischen Verformung der Muffe (22) angezeigt wird, und weiterhin solange der Gradient ansteigt, wodurch die elastische aufweitung des Rohres (24) angezeigt wird, und

Beenden der Tätigkeit der Pumpeinrichtung (40), wenn der Gradient abfällt, wodurch der Beginn der plastischen Verformung des Rohres (24) angezeigt wird.

2. Verfahren nach Anspruch 1 mit einer fortdauernden Tätigkeit der Pumpeinrichtung (40), um ihr Volumen um einen vorbestimmten Betrag weiter zu vermindern, um dadurch das Rohr (24) weiter aufzuweiten.

3. Verfahren zum Befestigen einer Muffe innerhalb eines Rohres mittels eines hydraulichen Systems zum Aufweiten von Rohren, das eine hydrauliche Rohraufweitenrichtung enthält, wobei die Aufweiteinrichtung innerhalb der Muffe (22) und die Muffe (22) innerhalb des Rohres (24) in Stellung gebracht werden und der Muffe (22) über eine Pumpeinrichtung (40) des Aufweitsystems unter Druck stehende Flüssigkeit zugeführt wird, um die Muffe (22) bis zur Berührung mit der Innenseite des Rohres (24) und dann die Muffe (22) und das Rohr (24) zusammen aufzuweiten, gekennzeichnet durch

Tätigkeitsbeginn der Pumpeinrichtung (40), welche eine Massenpumpeinrichtung ist, um die Flüssigkeitsmenge in dem System zunehmend zu erhöhen, während außerhalb der Aufweiteinrichtung ein gleichbleibendes Volumen in dem System aufrechterhalten wird,

fortdauernde Überwachung des Gradienten des Flüssigkeitsdruckes des Systems als Funktion der sunehmenden Erhöhung der Flüssigkeitsmenge in dem System,

fortdauernde Tätigkeit der Pumpeinrichtung (40), solange beobachtet wird, daß der Gradient abfällt, wodurch der Beginn der plastischen Verformung der Muffe (22) angezeigt wird, und weiterhin solange der Gradient ansteigt, wodurch die elastische Aufweitung des Rohres (24) angezeigt wird, und

Beenden der Tätigkeit der Pumpeinrichtung (40), wenn der Gradient abfällt, wodurch der Beginn der plastischen Verformung des Rohres (24) angezeigt wird.

4. Verfahren nach Anspruch 3 mit einer fortdauernden Tätigkeit der Pumpeinrichtung (40), um die Flüssigkeitsmenge im System um einen vorbestimmten Betrag weiter zu erhöhen, um dadurch das Rohr (24) weiter aufzuweiten.

5. Verfahren nach Anspruch 2 oder 4, wobei die sich ergebende bleibende Vergrößerung des Außendurchmessers des Rohres (24) nach dem Entspannen geringer ist als 0.15 mm (0.006 in.).

6. System zum Aufweiten von Rohren, das eine hydraulische Rohraufweiteinrichtung enthält, die innerhalb einer Muffe (22) innerhalb eines Rohres (24) in Stellung bringbar ist, das ferner Mittel (40) enthält, um Flüssigkeit innerhalb der Rohraufweiteinrichtung unter Druck zu setzen, um die Muffe (22) und das Rohr (24) zusammen aufzuweiten, wobei die Rohraufweiteinrichtung eine ausdehnbare Blaseinrichtung (10) ist, dadurch gekennzeichnet, daß Mittel vorgesehen sind, um die Änderungen im Flüssigkeitsdruck zu überwachen und um anzuzeigen, wenn die Fließgrenze des Rohres (24) erreicht ist, um die Vergrößerung der Außenmaße des Rohres (24) durch Beenden des Druckes auf die Flüssigkeit innerhalb der Blaseinrichtung genau zu begrenzen, wenn die Fließgrenze des Rohres erreicht ist.

7. System zum Aufweiten von Rohren nach Anspruch 6, wobei die Blaseinrichtung in Bezug auf das Rohr (24) nur in radialer Richtung ausdehnbar ist.

8. System zum Aufweiten von Rohren nach Anspruch 6 oder 7, wobei die Blaseinrichtung eine ausdehnbare Blase (10) mit einer Kammer (11) und eine Dichtungseinrichtung zum Abdichten der Blase (10) enthält, um das Entweichen von Flüssigkeit aus der Kammer (11) zu verhindern.

9. System zum Aufweiten von Rohren nach Anspruch 8, wobei die Blase (10) aus Polyurethan besteht.

10. System zum Aufweiten von Rohren nach Anspruch 8 oder 9, wobei die Blase (10) ein Zylinder mit einem rohrseitigen Ende (37) und einem bolzenseitigen Ende (38) ist, das rohrseitige Ende (37) und das bolzenseitige Ende (38) einen nach innen konisch verlaufenden äußeren Durchmesser (61) haben, sich die Kammer (11) der Länge nach durch die Blase (10) ausdehnt und daß die Dichteinrichtung eine verlängerte zylindrische Säule (12) enthält, die sich durch die Kammer (11) hindurch ausdehnt und ein mit einem Gewinde versehenes rohrseitiges Ende (41) sowie ein mit einem Gewinde versehenes bolzenseitiges Ende (42) aufweist, wobei sich in der Säule (12) eine erste Bohrung (18) von dem rohrseitigen Ende (41) der Länge nach ausdehnt, eine zweite Bohrung (19) zwischen dem rohrseitigen Blasenende (37) und dem bolzenseitigen Blasenende (38) von der ersten Bohrung (18) zur Oberfläche der Säule (12) verläuft, um eine Flüssigkeitsverbindung zwischen dem rohrseitigen Säulenende (41) und der Kammer (11) über die erste Bohrung (18) und die zweite Bohrung (19) zu bilden, ein rohrseitiges Endpaßstück (16) mit einer ein Gewinde tragenden Bohrung (26) versehen ist, das in das Gewinde des rohrseitigen Säulenendes (41) eingreift, sowie mit einer Rohrbohrung, die mit der Bohrung (26) in Flüssigkeitsverbindung steht und in die ein Flüssigkeitszuführrohr (20) eingreift, um eine Flüssigkeitsverbindung zwischen dem Flüssigkeitszuführrohr (20) und dem rohrseitigen Säulenende (41) zu bilden, die Bohrung (26) des rohrseitigen Endpaßstückes (16) nach außen konisch verläuft, um sich mit dem äußeren Durchmesser des rohrseitigen Blasenendes (37) zu vereinen, wobei ein bolzenseitiges endpaßstück (14) mit einer ein Gewinde tragenden Bohrung (30) versehen ist, das in das Gewinde des bolzenseitigen Säulenendes (42) eingreift, die Bohrung (30) des bolzenseitigen endpaßstückes (14) nach außen konisch verläuft, um sich mit dem äußeren Durchmesser des bolzenseitigen Blasenendes (38) zu vereinen, und wobei das rohrseitige Endpaßstück (16) und das bolzenseitige Endpaßstück (14) in die Säule (12) eingeschraubt sind, um sich mit dem rohrseitigen Blasenende (37) beziehungsweise mit dem bolzenseitigen Blasenende (38) zu vereinen, um die Kammer (11) abzudichten.

11. System zum Aufweiten von Rohren nach Anspruch 10, wobei die erste Bohrung (18) durch die Säule (12) verläuft, daß das bolzenseitige Endpaßstück (14) eine mit einem Gewinde versehene, mit der Bohrung (30) in Flüssigkeitsverbindung stehende Bohrung (29) enthält und ein mit einem Gewinde versehener Bolzen (15) in die Bohrung (29) eingeschraubt oder einschraubbar ist, um diese Bohrung abzudichten.

12. System zum Aufweiten von Rohren nach Anspruch 10 oder 11, wobei die Blase (10), das rohrseitige Endpaßstück (16) und das bolzenseitige Endpaßstück (14) gleiche Außendurchmesser haben.

13. System zum Aufweiten von Rohren, das eine hydraulische Rohraufweiteinrichtung, die innerhalb eines Rohres (24) in Stellung bringbar ist, eine Pumpe (40) und eine Flüssigkeitsleitung (31) enthält, die eine Flüssigkeitsverbindung zwischen der Pumpe (40) und der hydraulichen Rohraufweiteinrichtung bildet, gekennzeichnet durch einen Flüssigkeitsbehälter (44), der mit der Flüssigkeitsleitung (31) verbunden ist,

ein erstes Ventil (48) zum wahlweisen Schließen der Flüssigkeitsleitung (31), das zwischen dem Flüssigkeitsbehälter (44) und der Pumpe (40) angeordnet ist,

ein zweites Ventil (50) zum wahlweisen Schließen der Flüssigkeitsleitung (31), das zwischen der Pumpe (40) und der hydraulichen Aufweiteinrichtung angeordnet ist,

einen Druckfühler (34) und eine Anzeige (39) zum Messen und Anzeigen des Flüssigkeitsdruckkes zwischen dem zweiten Ventil (50) und der hydraulichen Aufweiteinrichtung und

einen Rechner (36), eingerichtet zum Empfang der Druckangabe des Druckfühlers (34) und programmiert zum Berechnen des Grades der Druckänderung als Funktion der zunehmenden Pumptätigkeit und des Endes der Pumptätigkeit beim des die plastische Ausgehnung des Rohres (24) anzeigenden Abfallen des Grades der Druckänderung.

14. System zum Aufweiten von Rohren nach Anspruch 13, wobei die enthaltene Flüssigkeit Glyzerin ist.

15. System zum Aufweiten von Rohren nach Anspruch 13 oder 14, wobei die Pumpeinrichtung (40) als Konstantvolumenpumpe zur zunehmenden Verminderung des Systemvolumens außerhalb der hydraulichen Aufweiteinrichtung arbeitet.

16. System zum Aufweiten von Rohren nach Anspruch 13 oder 14, wobei die Pumpeinrichtung (40) als Konstantmassenpumpe zur zunehmenden Erhöhung der Flüssigkeitsmenge in dem System arbeitet.

17. System zum Aufweiten von Rohren nach einem der Ansprüche 13 bis 16, wobei der Rechner (36) programmiert ist, um eine bestimmte Anzahl wieter zunehmender Tätigkeiten durch die Pumpe (40) zu erlauben, nachdem das Abfallen des Grades der Druckänderung beobachtet wurde, wodurch das Rohr (24) weiter aufgeweitet wird.

18. System zum Aufweiten von Rohren nach Anspruch 17, wobei die weiter zunehmenden Pumptätigkeiten sich in einer Zunahme des äußeren Rohrdurchmessers nach dem Entspannen von nicht mehr als 0.15 mm (0.006 in.) auswirken.

19. System zum Aufweiten von Rohren nach Anspruch 18, wobei der Abfall des Grades der Druckänderung einem vorangehenden, die plastische Ausdehnung der innerhalb des Rohres (24) angeordneten Muffe (22) anzeigenden Abfall und einem den Beginn der elastischen Ausdehnung des Rohres (24) anzeigenden Anstieg des Grades der Druckänderung folgt.

## FIG.1

SYSTEM FLUID PRESSURE VS INCREMENTAL PUMP ACTION

## FIG.2

FIG.3